Europäisches Patentamt

European Patent Office

Office européen des brevets

(11) Veröffentlichungsnummer: **0 392 974**
**A2**

## EUROPÄISCHE PATENTANMELDUNG

(21) Anmeldenummer: 90810213.0

(22) Anmeldetag: 19.03.90

(51) Int. Cl.⁵: **B32B 35/00**

(30) Priorität: 14.04.89 DE 3912242

(43) Veröffentlichungstag der Anmeldung:
**17.10.90 Patentblatt 90/42**

(84) Benannte Vertragsstaaten:
**AT BE CH DE ES FR GB IT LI NL SE**

(71) Anmelder: **Gurit-Essex AG**

**CH-8807 Freienbach(CH)**

(72) Erfinder: **Braun, Moritz, Dr.**
**Wilhofstrasse 3**
**CH-8125 Zollikerberg(CH)**
Erfinder: **Radlinsky, Jan**
**Weidstrasse 22**
**CH-8803 Rüschlikon(CH)**

(74) Vertreter: **Rottmann, Maximilian R. et al**
**c/o Rottmann, Zimmermann + Partner AG**
**Glattalstrasse 37**
**CH-8052 Zürich(CH)**

(54) **Vorrichtungen zum maschinellen Aufbringen von flexiblen, einseitig klebbaren Schichtkörpern auf Werkstücke und Verwendung derselben.**

(57) Die Vorrichtung dient zum maschinellen Aufbringen eines flexiblen, einseitig klebefähigen Schichtkörpers, welcher aus einer Trägerschicht, einer Klebstoffschicht und einer die Klebstoffschicht abdeckenden, abzuziehenden Schutzfolie besteht, als Verstärkung auf die Oberfläche eines Werkstücks und weist folgende Teilvorrichtungen auf: a) einen Auflagetisch zum Auflegen des Schichtkörpers; b) eine Ablösevorrichtung zum Ablösen der Schutzfolie vom Schichtkörper in einer Randzone; c) eine Abzugsvorrichtung zum Abziehen der Schutzfolie vom Schichtkörper; und d) eine mit einem Vakuumgreifer versehene Fördervorrichtung, welche den Schichtkörper vom Auflagetisch abhebt, an der Abzugsvorrichtung vorbeiführt und, gegebenenfalls nach Erwärmung mittels einer Heizvorrichtung, auf die Oberfläche des Werkstücks aufsetzt.

Der Vakuumgreifer besteht aus einem Tampon aus verfombarem, weichelastischem Material, welcher eine konvexe Arbeitsfläche aufweist, in welcher als Saugnäpfe wirkende Vertiefungen vorgesehen sind, die über Kanäle mit einem Vakuumerzeuger verbindbar sind.

FIG.5

EP 0 392 974 A2

Die Erfindung betrifft die in den Ansprüchen 1 bis 23 umschriebenen Vorrichtungen sowie die in Anspruch 24 umschriebene Verwendung derselben.

Es ist bekannt, zur Versteifung von Blechen, Kunststoff-Formkörpern und dgl., insbesondere von Automobilkarosserie-Teilen, besondere Versteifungskörper zu verwenden. Diese sind in der Regel flexible, einseitig klebefähige Schichtkörper, welche bestehen aus:
- einer eigentlichen Versteifungsschicht, insbesondere aus einem mit wärmehärtenden Harz gebundenen Glasfasergewebe; und
- einer Klebstoffschicht, insbesondere aus einem wärmehärtenden Harz.

Im Interesse einer einfachen Applikation des Schichtkörpers bildet man die Klebstoffschicht im allgemeinen mit klebriger Oberfläche aus, so dass der einmal aufgebrachte Versteifungskörper bis zur Wärmebehandlung an der betreffenden Stelle des Bleches haftet.

Dies bedingt aber, dass die klebrige Oberfläche der Klebstoffschicht bis zur Verwendung des Schichtkörpers mit einem Schutz versehen werden muss, um sie vor Verschmutzung zu schützen und ein Stapeln der Schichtkörper zu ermöglichen.

Nach dem Stand der Technik kann ein solcher Schutz in der Weise erfolgen, dass eine Schutzfolie, insbesondere aus geeignet behandeltem Papier, auf die Schichtkörper aufgebracht und erst unmittelbar vor der Applikation des Versteifungskörpers wieder abgezogen wird.

Ein Nachteil der Verwendung von Versteifungskörper dieser Art ist der, dass das Abziehen der Schutzfolie einen zusätzlichen, personalintensiven Arbeitsgang bedingt, der sich bisher maschinell nicht durchführen liess. Dies war vor allem in der Automobilindustrie, in welcher der Trend auf eine weitgehende Automatisierung aller Arbeitsschritte hin geht, unerwünscht.

Um diesen zusätzlichen Arbeitsschritt zu umgehen, wurde in der DE-OS 37 20 267 vorgeschlagen, den erwähnten Schutz in der Weise zu bewerkstelligen, dass man die Klebstoffschicht mit einer bei Wärmeeinwirkung schrumpfenden Folie abdeckt, welche bei der Schrumpfung die Klebstoffschicht gleichmässig freigibt, z.B. indem sie mit Schlitzen versehen ist, die sich bei der Wärmehärtung der Klebstoffschicht zu Öffnungen, welche einen namhaften Teil der Klebstoffschicht freigeben, erweitern.

Diese Lösung hat aber den Nachteil, dass eben nur ein Teil der Klebstoffschicht freigegeben wird, so dass die Haftung des Verstärkungskörpers geringer ist als bei einer ganzflächigen Verklebung.

Schliesslich wurde auch schon vorgeschlagen, Schichtkörper zu verwenden, welche anstelle einer Klebstoffschicht mit klebriger Oberfläche eine Schicht aus Schmelzklebstoff, der bei Raumtemperatur nicht klebrig ist sondern erst unter der Wärmeeinwirkung klebrig wird, aufweisen.

Derartige Schichtkörper weisen jedoch ebenfalls den Nachteil einer zu geringen Haftung auf.

Ein anderes ungelöstes Problem war dasjenige des blasenfreien Aufbringens des Versteifungskörpers auf die zu versteifende Oberfläche. Ein solches ist unbedingt notwendig, da jede Blasenbildung zwischen der Klebstoffschicht und der zu versteifenden Oberfläche den Versteifungseffekt infolge Verkleinerung der wirksamen Klebefläche wesentlich vermindert.

Aufgabe der Erfindung war nun, die erwähnten Probleme in einer Weise zu lösen, dass Schichtkörper der erwähnten Art maschinell und blasenfrei auf die Oberfläche eines Werkstücks aufgebracht werden können.

Diese Augabe wird erfindungsgemäss gelöst durch die in den Ansprüchen 1 bis 20 umschriebene Vorrichtungen und den in den An sprüchen 21 bis 23 umschriebenen Vakuumgreifer.

Erfindungswesentlich für eine maschinelle Durchführung ist dabei insbesondere zweierlei, nämlich:
- dass der Schichtkörper beim Aufsetzen eine konvexe Form aufweist, derart, dass er mit der Oberfläche des Werkstücks zuerst mit seiner Mitte und anschliessend sukzessive nach aussen fortschreitend in Berührung kommt, so dass eine Blasenbildung vermieden wird;
und
- dass bei Verwendung von Schichtkörpern, welche eine abzuziehende Schutzfolie aufweisen, diese vor dem eigentlichen Abziehen in einer Randzone von der Klebstoffschicht gelöst wird, so dass sie anschliessend mittels Vakuum abgezogen werden kann.

Die Erfindung wird im folgenden anhand der Zeichnung und der darin dargestellten beispielsweisen Ausführungsformen näher erläutert. Es stellen dar:

Fig. 1 den ersten der drei oben erwähnten Typen von einseitig klebefähigen Schichtkörpern, nämlich denjenigen mit abzuziehender Schutzfolie (Typ 1);

Fig. 2 und 3 den zweiten der drei oben erwähnten Typen von einseitig klebefähigen Schichtkörpern, nämlich denjenigen mit einer Schutzfolie aus geschlitzter Schrumpffolie (Typ 2), und zwar Fig. 2 vor und Fig. 3 nach der Wärmebehandlung;

Fig. 4 den dritten der drei oben erwähnten Typen von einseitig klebefähigen Schichtkörpern, nämlich denjenigen mit einer Schmelzklebstoffschicht als Klebeschicht (Typ 3);

Fig. 5 das Funktionsschema einer Vorrichtung zur Verarbeitung von Schichtkörpern des Typs 1, in Seitenansicht;

Fig. 6 die Vorrichtung nach Fig. 5 in Draufsicht;

Fig. 7 eine perspektivische Ansicht eines erfindungsgemässen Vakuumgreifers;

Fig. 8 eine Unteransicht des in Fig. 7 dargestellten Vakuumgreifers; und

Fig. 9 einen Schnitt nach A-A in Fig. 8.

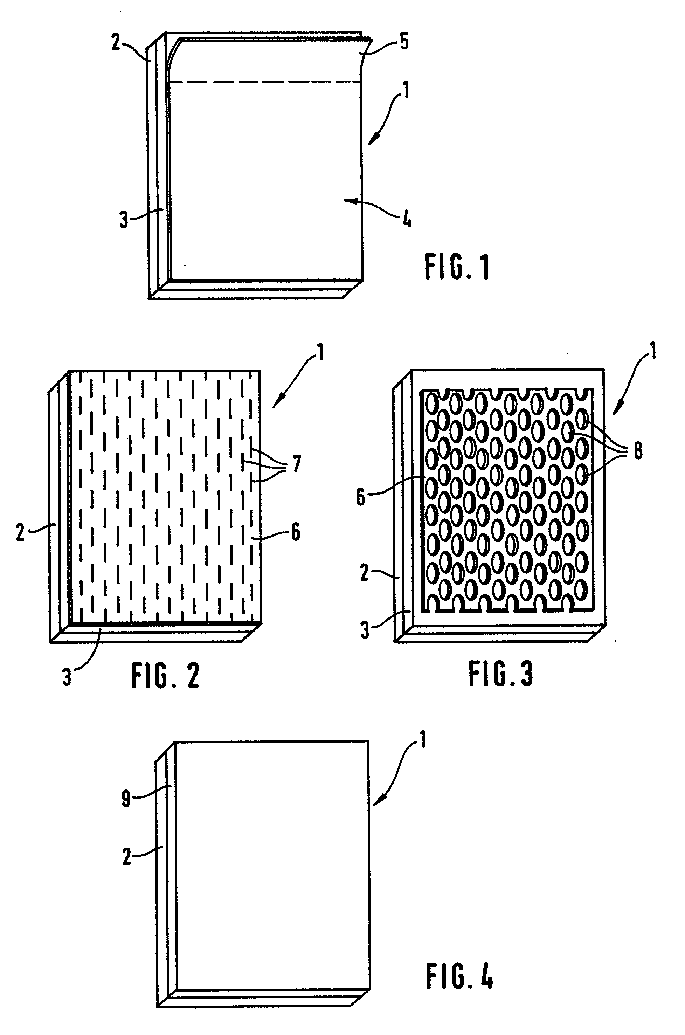

Alle in den Fig. 1 bis 4 dargestellten Schichtkörper 1 (Typen 1 bis 3) weisen eine Trägerschicht 2 auf, welche vorzugsweise aus einem mit wärmehärtenden Harz gebundenem Glasfasergewebe besteht.

Auf dieser Trägerschicht 2 ist bei den Schichtkörpern der Fig. 1 bis 3 (Typen 1 und 2) eine Klebstoffschicht 3 angeordnet, welche wärmehärtend und bei Raumtemperatur klebrig ist. Diese ist beim Schichtkörper der Fig. 1 (Typ 1) mit einer bei der Verwendung abzuziehenden Schutzfolie 4, vorzugsweise aus imprägniertem Papier, abgedeckt. In der Darstellung ist in einer Randzone 5 die Schutzfolie 4 bereits von der Klebstoffschicht 3 abgelöst.

Beim Schichtkörper der Fig. 2 und 3 (Typ 2) ist die Klebstoffschicht 3 mit einer mit Schlitzen 7 versehenen Schrumpffolie 6 abgedeckt (Fig. 2). Bei der Wärmehärtung der Klebstoffschicht 3 schrumpft die Folie 6. Die Schlitze 7 erweitern sich dabei zu Öffnungen 8 (Fig. 3); diese geben einen namhaften Teil der Klebstoffschicht 3 frei.

Beim Schichtkörper der Fig. 4 (Typ 3) ist auf der Trägerschicht 2 eine Schmelzklebstoffschicht 9 angeordnet, welche bei Raumtemperatur nichtklebrig ist, so dass eine Schutzfolie entfallen kann.

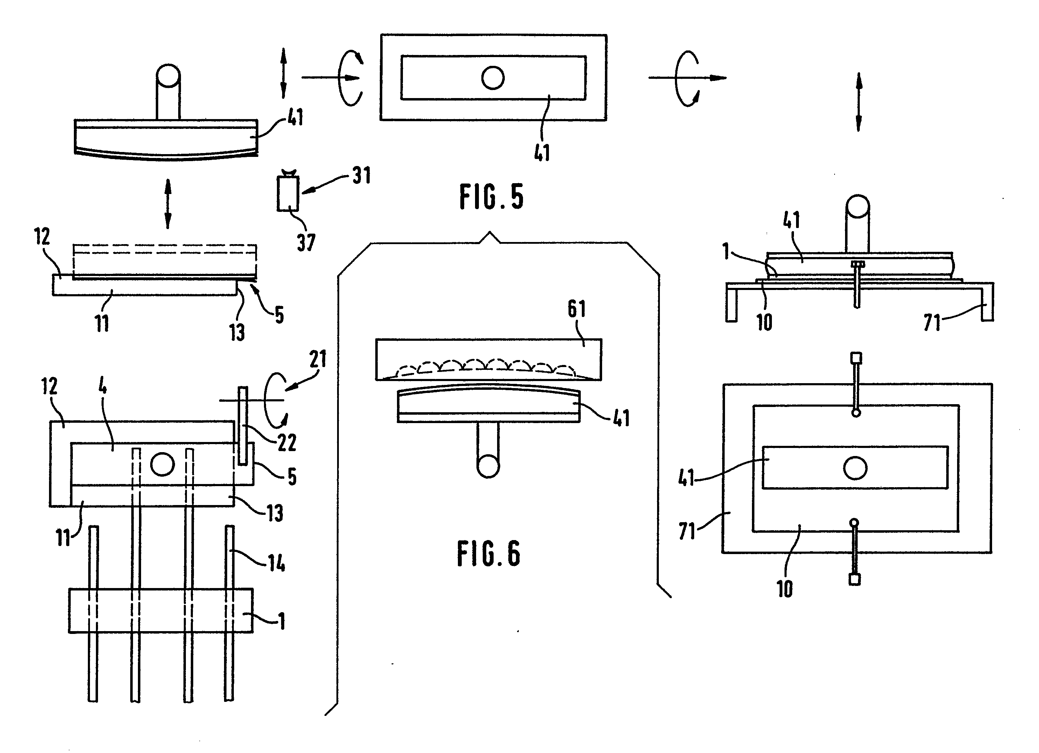

Die in den Fig. 5 und 6 schematisch dargestellte Vorrichtung dient der Verarbeitung von Schichtkörpern des im Zusammenhang mit Fig. 1 erläuterten Typs 1 und arbeitet wie folgt:

Die Schichtkörper 1 werden von einer Transportvorrichtung 14 einzeln mit der Schutzfolie 4 nach unten und der Trägerschicht 2 nach oben dem Auflagetisch 11 zugeführt. Dieser weist einen oder mehrere Anschläge 12 auf, die so eingestellt sind, dass der Schichtkörper 1 mit einer Randzone 5 frei über den Rand 13 des Auflagetisches 11 hinausragt. Er wird dabei von dem weiter unten beschriebenen Vakuumgreifer 41 auf dem Auflagetisch 11 festgehalten.

Mittels einer mit mindestens einem Schlagwerkzeug 22 versehenen Ablösevorrichtung 21 wird nun in der freien Randzone S der Schichtkörper 1 von der Seite der Trägerschicht 2 her angeschlagen. Dabei löst sich in der erwähnten Randzone S die Schutzfolie 4 von der Klebstoffschicht 3. Die Ablösevorrichtung 21 ist zweckmässigerweise als Paddelrad, dessen Paddel als Schlagwerkzeuge 22 wirken, ausgestaltet.

Statt im Bereich des Auflagetisches 11 kann die Ablösevorrichtung 21 auch im Bereich der Transportvorrichtung 14 angeordnet sein. In diesem Falle ist dafür Sorge zu tragen, dass die Schichtkörper 1 auf der Transportvorrichtung 14 mit einer freiliegenden Randzone 5 gefördert und so fest gehalten werden, dass sie angeschlagen werden können.

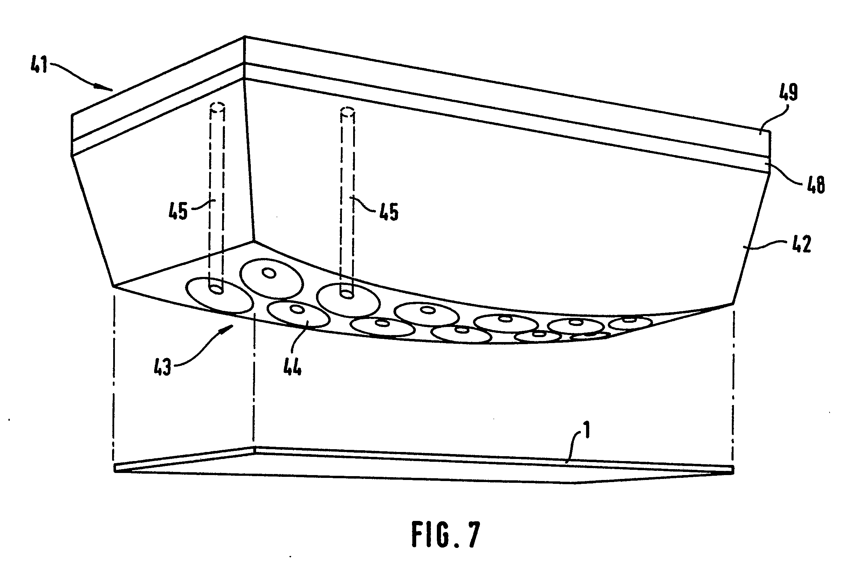

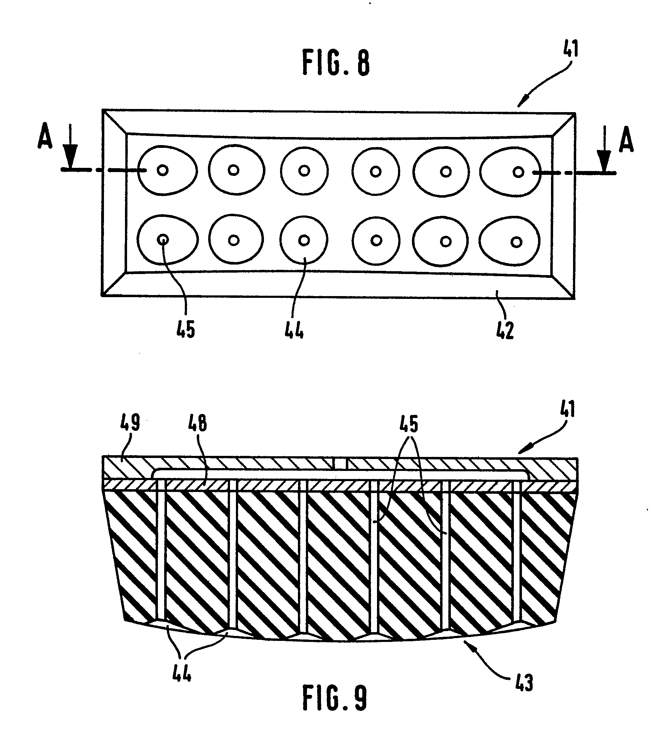

Nach der Ablösung der Schutzfolie 4 in der erwähnten Randzone 5 wird der Schichtkörper 1, welcher vom Vakuumgreifer 41 von der Seite der Trägerschicht 2 her aufgenommen wurde, von diesem weitergefördert. Der Vakuumgreifer 41 ist im Zusammenhang mit den Fig. 7 bis 9 im einzelnen erläutert.

Der Schichtkörper 1, welcher die konvexe Form des Vakuumgreifers 41 angenommen hat, wird nun relativ zu einer als Saugelement ausgebildeten Abzugsvorrrichtung 31 bewegt, welche die Schutzfolie 4, beginnend mit der abgelösten Randzone 5, mittels Vakuum vom Schichtkörper 1 abzieht.

Bei der dargestellten Ausführungsform der erfindungsgemässen Vorrichtung besteht dieses Saugelement aus einem stationär angeordneten Saugbalken 37, welcher die abgelöste Randzone 5 der Schutzfolie 4 ergreift und festhält, so dass letztere bei der Weiterförderung des Schichtkörpers 1 durch den Vakuumgreifer 41 von der Klebstoffschicht 3 abgezogen wird.

Das Saugelement kann aber auch als bewegliche Saugwalze ausgebildet sein, welche sich entweder über den stationär gehaltenen oder in Gegenrichtung ebenfalls bewegten Schichtkörper 1 bewegt und dabei auf diesem abrollt.

Der Vakuumgreifer 41 ist Teil einer (nicht dargestellten) Fördervorrichtung, welche den Schichtkörper 1 vom Auflagetisch 11 bis zur Oberfläche des Werkstücks 10 fördert.

Bei der Verarbeitung von Schichtkörpern der in den Fig. 2 bis 4 dargestellten Typen 2 und 3 entfallen die Ablösevorrichtung 21 und die Abzugsvorrichtung 31.

Die Schichtkörper 1 werden nun einer Heizvorrichtung 61 zuge führt. Dort werden die Schichtkörper der Typen 1 und 2 soweit aufgeheizt, dass nach dem Aufbringen auf das Werkstück die Wärmehärtung der Klebstoffschicht 3 abläuft. Bei Schichtkörpern des Typs 2 erfolgt zusätzlich noch die erwähnte Bildung von Öffnungen 8 und dadurch die Freigabe eines Teils der Klebstoffschicht 3. Bei Schichtkörpern des Typs 3 wird die Schmelzklebstoffschicht 9 aufgeschmolzen.

Bei der dargestellten Ausführungsform der erfindungsgemässen Vorrichtung ist die Heizvorrichtung 61 als Infrarotstrahler ausgebildet und stationär angeordnet. Sie kann aber auch als Mikrowellenstrahler oder zum Erwärmen elektrisch leitender Schichtkörper als Induktionsheizung ausgebildet sein.

Die Heizvorrichtung 61 braucht aber nicht stationär angeordnet sein; sie kann, gleichgültig nach welchem Prinzip die Erwärmung stattfindet, Bestandteil der Fördervorrichtung sein und mit dem Schichtkörper 1 mitlaufen. Insbesondere kann die Heizvorrichtung 61 Bestandteil des Vakuumgreifers 41 sein.

In der Folge wird der Schichtkörper 1 mit der aktivierten Klebstoffschicht 3 bzw. 9 auf die Oberfläche des zu verstärkenden Werkstücks 10 aufgesetzt. Dieses wird zweckmässig mittels einer Schnellspannvorrichtung 71 auf einem Werkstückhalter festgehalten. Das Aufsetzen des Schichtkörpers 1 auf das Werkstück 10 erfolgt, wie ebenfalls zum Zusammenhang mit den Fig. 7 bis 9 im einzelnen erläutert, zuerst in der Mitte und beim weiteren An drucken des Vakuumgreifers 41 sukzessive nach aussen fortschreitend.

Nach dem Aufsetzen des Schichtkörpers 1 wird dieser, gegebenenfalls nach Abwarten einer bestimmten Anpressdauer, mittels Druckluft vom Vakuumgreifer 41 abgedrückt. Darauf kann der Zyklus von neuem beginnen.

Der in den Fig. 7 bis 9 dargestellte Vakuumgreifer 41 besteht aus einem Tampon 42 aus verformbaren, weichelastischem Material, der eine konvexe Arbeitsfläche 43 aufweist. Der Tampon 42 ist auf eine Monatageplatte 48 aufgeklebt. Diese ist ihrerseits auf einer Vakuumplatte 49 angeordnet, welche mit einem Vakuumerzeuger (nicht dargestellt) und gegebenenfalls wahlweise auch mit einem Druckerzeuger (nicht dargestellt) verbunden werden kann.

In der Arbeitsfläche 43 des Tampons 42 sind als Saugnäpfe wirkende Vertiefungen 44 vorgesehen, welche über die Montageplatte 48 durchdringende Kanäle 45 mit der Vakuumplatte 49 in Verbindung stehen.

Im Betrieb wird der Tampon 42 nun auf den auf dem Auflagetisch 11 (nicht dargestellt) liegenden Schichtkörper 1 abgesenkt und mittels Vakuum auf die Arbeitsfläche 43 angesogen. Dabei nimmt der Schichtkörper 1 dieselbe konvexe Form wie die Arbeitsfläche 43 an.

Das Aufsetzen des erhitzten Schichtkörpers 1 auf die Oberfläche des Werkstücks 10 erfolgt infolge der konvexen Form zuerst in der Mitte und schreitet bei stärkerem Anpressen danach sukzessive nach aussen fort. Auf diese Weise wird eine Blasenbildung auch bei kurzen Taktzeiten mit Sicherheit vermieden.

Zur Beschleunigung des Abstossens des aufgebrachten Schichtkörpers 1 vom Tampon 42 wird nun zweckmässigerweise der Vakuumplatte 49 aus einem Druckerzeuger ein Druckmedium, vorzugsweise Druckluft, zugeführt.

Der Vakuumgreifer 41 kann aber auch so ausgestaltet sein, dass er zwei Arten von Kanälen 45

aufweist, von denen die eine mit einem Vakuumerzeuger und die andere mit einem Druckerzeuger verbindbar ist.

## Ansprüche

1. Vorrichtung zum maschinellen Aufbringen eines flexiblen, einseitig klebefähigen Schichtkörpers (1), welcher aus einer Trägerschicht (2), einer Klebstoffschicht (3) und einer die Klebstoffschicht (3) abdeckenden, abzuziehenden Schutzfolie (4) besteht, auf die Oberfläche eines Werkstücks (10), gekennzeichnet durch folgende Teilvorrichtungen:

   a) einen Auflagetisch (11) zum Auflegen des Schichtkörpers (1);

   b) eine Ablösevorrichtung (21) zum Ablösen der Schutzfolie (4) vom Schichtkörper (1) in einer Randzone (5);

   c) eine Abzugsvorrichtung (31) zum Abziehen der Schutzfolie (4) vom Schichtkörper (1); und

   d) eine mit einem Vakuumgreifer (41) versehene Fördervorrichtung, welche den Schichtkörper (1) vom Auflagetisch (11) abhebt, an der Abzugsvorrichtung (31) vorbeiführt und auf die Oberfläche des Werkstücks (10) aufsetzt).

2. Vorrichtung nach Anspruch 1, dadurch gekennzeichnet, dass die Ablösevorrichtung (21) mindestens ein Schlagwerkzeug (22) aufweist, welches von der Seite der Trägerschicht (2) her gegen eine freiliegende Randzone (5) des Schichtkörpers (1) schlägt und dabei in dieser Randzone (5) die Schutzfolie (4) von der Klebstoffschicht (3) ablöst.

3. Vorrichtung nach Anspruch 2, dadurch gekennzeichnet, dass die Ablösevorrichtung (21) als Paddelrad ausgebildet ist, dessen Paddel als Schlagwerkzeuge (22) wirken.

4. Vorrichtung nach Anspruch 2 oder 3, dadurch gekennzeichnet, dass der Auflagetisch (11) mindestens einen Anschlag (12) aufweist, welcher so einstellbar ist, dass eine Randzone (5) des Schichtkörpers (1) über den Rand (13) des Auflagetisches (11) hinausragt und freiliegt.

5. Vorrichtung nach Anspruch 2 oder 3) dadurch gekennzeichnet, dass dem Auflagetisch (11) eine Transportvorrichtung (14) vorgeschaltet ist, welche die Schichtkörper (1) dem Auflagetisch (11) einzeln zuführt und sie dabei so hält, dass eine freiliegende Randzone (5) entsteht, und dass die Ablösevorrichtung (21) während des Transportes auf die Schichtkörper (1) einwirkt.

6. Vorrichtung nach einem oder mehreren der Ansprüche 1 bis 5, dadurch gekennzeichnet, dass die Abzugsvorrichtung (31) als ein relativ zum Schichtkörper (1) bewegtes Saugelement ausgebildet ist, welches die Schutzfolie (4), beginnend mit der abgelösten Randzone (5), mittels Vakuum vom Schichtkörper (1) abzieht.

7. Vorrichtung nach Anspruch 6, dadurch gekennzeichnet, dass das Saugelement als bewegliche Saugwalze ausgebildet ist, welche sich über den stationär gehaltenen Schichtkörper (1) bewegt.

8. Vorrichtung nach Anspruch 6, dadurch gekennzeichnet, dass das Saugelement als bewegliche Saugwalze ausgebildet ist, welche sich in Gegenrichtung über den ebenfalls bewegten Schichtkörper (1) bewegt.

9. Vorrichtung nach Anspruch 6, dadurch gekennzeichnet, dass das Saugelement als stationärer Saugbalken (37) ausgebildet ist, an welchem vorbei der Schichtkörper (1) bewegt wird.

10. Vorrichtung nach einem oder mehreren der Ansprüche 1 bis 9, dadurch gekennzeichnet, dass sie ausserdem eine nach der Abzugsvorrichtung (31) angeordnete Heizvorrichtung (61) zum Erwärmen der Klebstoffschicht (3) des Schichtkörpers (1) aufweist.

11. Vorrichtung zum maschinellen Aufbringen eines flexiblen, einseitig klebefähigen Schichtkörpers (1), welcher aus einer Trägerschicht (2), einer Klebstoffschicht (3) und einer die Klebstoffschicht (3) abdeckenden, geschlitzten Schrumpffolie (7) besteht, auf die Oberfläche eines Werkstücks (10), gekennzeichnet durch folgende Teilvorrichtungen:
a) einen Auflagetisch (11) zum Auflegen des Schichtkörpers (1);
b) eine Heizvorrichtung (61) zum Erhitzen der geschlitzten Schrumpffolie (7);
c) eine mit einem Vakuumgreifer (41) versehene Fördervorrichtung, welche den Schichtkörper (1) vom Auflagetisch (11) abhebt) an der Heizvorrichtung (61) vorbeiführt und auf die Oberfläche des Werkstücks (10) aufsetzt.

12. Vorrichtung zum maschinellen Aufbringen eines flexiblen, einseitig klebefähigen Schichtkörpers (1), welcher aus einer Trägerschicht (2) und einer Schmelzklebstoffschicht (8) besteht, auf die Oberfläche eines Werkstücks (10), gekennzeichnet durch folgende Teilvorrichtungen:
a) einen Auflagetisch (11) zum Auflegen des Schichtkörpers (1);
b) eine Heizvorrichtung (61) zum Erhitzen der Schmelzklebstoffschicht (8);
c) eine mit einem Vakuumgreifer (41) versehene Fördervorrichtung, welche den Schichtkörper (1) vom Auflagetisch (11) abhebt, an der Heizvorrichtung (61) vorbeiführt und auf die Oberfläche des Werkstücks (10) aufsetzt.

13. Vorrichtung nach einem der Ansprüche 10 bis 12, dadurch gekennzeichnet, dass die Heizvorrichtung (61) als Infrarotstrahler ausgebildet ist.

14. Vorrichtung nach einem der Ansprüche 10 bis 12, dadurch gekennzeichnet, dass die Heizvorrichtung (61) als Mikrowellenstrahler ausgebildet ist.

15. Vorrichtung nach einem der Ansprüche 10 bis 12, dadurch gekennzeichnet, dass die Heizvorrichtung (61) zum Erwärmen elektrisch leitender Schichtkörper (1) als Induktionsheizung ausgebildet ist.

16. Vorrichtung nach einem der Ansprüche 13 bis 15, dadurch gekennzeichnet, dass die Heizvorrichtung (61) Bestandteil der Fördervorrichtung ist und mit dem Schichtkörper (1) mitläuft.

17. Vorrichtung nach Patentanspruch 16, dadurch gekennzeichnet, dass die Heizvorrichtung (61) Bestandteil des Vakuumgreifers (41) ist.

18. Vorrichtung nach einem oder mehreren der Ansprüche 1 bis 17, dadurch gekennzeichnet, dass der Vakuumgreifer (41) aus einem Tampon (42) aus verfombarem, weichelastischem Material besteht, welcher eine konvexe Arbeitsfläche (43) aufweist, in welcher als Saugnäpfe wirkende Vertiefungen (44) vorgesehen sind, die über Kanäle (4S) mit einem Vakuumerzeuger verbindbar sind.

19. Vorrichtung nach Anspruch 18, dadurch gekennzeichnet, dass die Kanäle (45) wahlweise mit einem Druckerzeuger verbindbar sind, um den Schichtkörper (1) nach dem Aufsetzen auf das Werkstück (10) vom Tampon (42) abzudrücken.

20. Vorrichtung nach Anspruch 18 oder 19, dadurch gekennzeichnet, dass sie zwei Arten von Kanälen (45) aufweist, von denen die eine mit einem Vakuumerzeuger und die andere mit einem Druckerzeuger verbindbar ist.

21. Vakuumgreifer (41) zum Halten und blasenfreien Aufsetzen von flexiblen, einseitig klebefähigen Gegenständen (1) auf eine Oberfläche (10), dadurch gekennzeichnet, dass er aus einem Tampon (42) aus verfombarem, weichelastischem Material besteht, der eine konvexe Arbeitsfläche (43) aufweist, in welcher als Saugnäpfe wirkende Vertiefungen (44) vorgesehen sind, die über Kanäle (45) mit einem Vakuumerzeuger verbindbar sind.

22. Vakuumgreifer nach Anspruch 21, dadurch gekennzeichnet, dass die als Saugnäpfe wirkende Vertiefungen (44) über die Kanäle (45) wahlweise mit einem Druckerzeuger verbindbar sind, um den Gegenstand (1) nach dem Aufsetzen auf die Oberfläche (10) vom Tampon (42) abzudrücken.

23. Vakuumgreifer nach Anspruch 21 oder 22, dadurch gekennzeichnet, dass er zwei Arten von Kanälen (45) aufweist, von denen die eine mit einem Vakuumerzeuger und die andere mit einem Druckerzeuger verbindbar ist.

24. Verwendung einer Vorrichtung nach einem oder mehreren der Ansprüche 1 bis 23 zum Aufbringen einer Klebeverstärkung auf Karosserieteile in der Automobilindustrie.

FIG. 1

FIG. 2

FIG. 3

FIG. 4

FIG.5

FIG.6

FIG. 7

EP 0 392 974 A2

FIG. 8

41

A

A

45    44    42

49  48                45              41

44                43

FIG. 9